# Europäisches Patentamt

## European Patent Office

## Office européen des brevets

(19)

(11) Publication number: **0 242 932**
**B1**

(12)

# EUROPEAN PATENT SPECIFICATION

(45) Date of publication of the patent specification:
27.06.90

(21) Application number: **87200764.6**

(22) Date of filing: **23.04.87**

(51) Int. Cl.⁵: **A01B 29/04,** A01B 29/06,
A01B 49/02

(54) A soil cultivating machine.

(30) Priority: **24.04.86  NL 8601048**

(43) Date of publication of application:
**28.10.87 Bulletin 87/44**

(45) Publication of the grant of the patent:
**27.06.90 Bulletin 90/26**

(84) Designated Contracting States:
**DE FR GB**

(56) References cited:
EP-A- 0 189 957
DE-A- 2 438 374
DE-C- 512 078
US-A- 1 916 330

(73) Proprietor: **C. van der Lely N.V., Weverskade 10 P.O. Box 26, NL-3155 ZG Maasland(NL)**

(72) Inventor: **Van der Lely, Ary, Weverskade 10a, Maasland(NL)**
Inventor: **Bom, Cornelis Johannes Gerardus, Laan van Nieuw Rozenburg 16, Rozenburg(NL)**

(74) Representative: **Mulder, Herman et al, Octrooibureau Van der Lely N.V. Weverskade 10 P.O. Box 26, NL-3155 ZG Maasland(NL)**

## Description

The invention relates to a soil cultivating machine comprising a plurality of soil working members mounted on a frame and a packer roller located therebehind, which roller includes a cylindrical portion and spaced apart crowns of cams provided thereon, whilst scraper elements are arranged between said crowns of cams.

Soil cultivating machines of the kind set forth as known from the german patent application 2 438 374 include scraper elements that are arranged in such a way that the compactness of the overall assembly, in particular when the soil cultivating machine is used in combination with a further machine, e.g. a seed drill or a planting machine, is adversely affected thereby.

In addition, the prior art configuration provides a scraper element support of such a type that an adaptation of the position of the scraper elements to any irregularities in the curvature of the cylindrical portion is hardly possible or is attended by unwanted wear.

With the construction according to the invention there is proposed such a support for the scraper elements that the whole can be of a compact design and an efficient adaptation of that side of a scraper element which cooperates with the cylindrical portion of the packer roller can be obtained.

According to the invention, this is achieved in that during operation the scraper elements are pivotable about a pivotal axis located, relative to the direction of operative travel of the machine, before a vertical plane through the axis of rotation of the roller and within the envelope defined by the ends of the cams of the respective crowns of cams.

By means of this provision it is possible to obtain, in addition to a compact structure of the whole, a support for the scraper elements allowing same to adapt themselves in an efficient manner to the said irregularities in the curvature of the cylindrical portion, without there being question of an excessive wear.

With the construction according to the invention, the scraper elements may be located at such a distance from the pivotal axis that a smooth adaptation of that side of the scraper elements which cooperates with the cylindrical portion can be achieved, as a result of which the desired scraping effect will be at its maximum.

If a scraper element is fitted to an arm which extends in the direction of operative travel of the machine and, from a pivotal point between two crowns of cams, extends under the cylindrical portion of the roller to the rear, it is possible, during operation, to utilize the pressure exerted by the soil on the arm to press the scraper element against the cylindrical portion.

With the construction according to the invention, it is alternatively possible to exert a spring pressure on the pivotal arm for a scraper element. In this case it is possible to enable the spring pressure to act on the front end of the scraper element arm, whereby, like in the case of soil pressure, a smooth adaptation of that side of the scraper element which cooperates with the cylindrical portion can be obtained owing to the comparatively great length of the arm.

For a better understanding of the present invention and to show how the same may be carried into effect, reference will now be made, by way of example, to the accompanying drawings, in which:

Figure 1 is a schematic plan view of a soil cultivating machine comprising a packer roller according to the invention;

Figure 2 is, to an enlarged scale, a view taken in the direction of the arrow II in Figure 1;

Figure 3 is a view taken in the direction of the arrow III in Figure 2;

Figure 4 is, to an enlarged scale, a view of the pivotal support of an arm for a scraper element;

Figure 5 is a view taken on the line V-V in Figure 4;

Figure 6 is a view in accordance with Figure 2 of a second embodiment of a packer roller according to the invention;

Figure 7 is a view taken in the direction of the arrow VII in Figure 6;

Figure 8 is a view in accordance with Figure 2 of a third embodiment of a packer roller according to the invention;

Figure 9 is a view in accordance with Figure 2 of a fourth embodiment of a packer roller according to the invention;

Figure 10 is a view taken on the line X-X in Figure 9;

Figure 11 is a view in accordance with Figure 2 of a fifth embodiment of a packer roller according to the invention;

Figure 12 is a view taken in the direction of the arrow XII-XII in Figure 11;

Figure 13 is a plan view of a soil cultivating machine including a sixth embodiment of a packer roller according to the invention, and

Figure 14 is a view taken on the line XIV-XIV in Figure 13.

The implement shown in the drawings relates to a soil cultivating machine, in particular one for preparing a seed bed.

The machine comprises a box-like frame portion 1 which extends transversely to the direction of operative travel A and in which the upwardly directed, preferably at least substantially vertical, shafts 2 of soil working members 3 are journalled equidistantly, preferably spaced apart by 25 cms.

Each of the soil working members 3 comprises an at least substantially horizontal carrier 4, which is fastened to that end of a shaft 2 projecting from the underside of this frame portion and which at its ends is provided with downwardly extending soil working elements 5 in the form of tines. Each of the ends of the box-like frame portion 1 is closed by a plate 6, which extends upwardly and at least substantially parallel to the direction of operative travel A of the machine and at its front end is provided with a bolt 7 extending transversely to the direction of operative travel A, and about which bolt an arm 8 extending rearwardly along a plate 6 is freely pivotal. Near its rear side the box-like frame portion 1 comprises an adjusting device for each of the arms 8, which adjusting device is preferably constituted by a threaded spindle 9. Just behind the frame portion, each of the arms 8 has an obliquely downwardly and rearwardly directed portion which subsequently merges into a rearmost portion that extends parallel to the foremost portion of the arm. The rearmost portion of each arm 8 is provided with a support 10 which extends obliquely downwardly and rearwardly. A roller 11 is arranged freely rotatably between the respective supports 10, near the lowermost side. To that end the roller 11 is provided at its ends with shafts 12 which are supported freely rotatably by bearings accommodated in bearing housings 13.

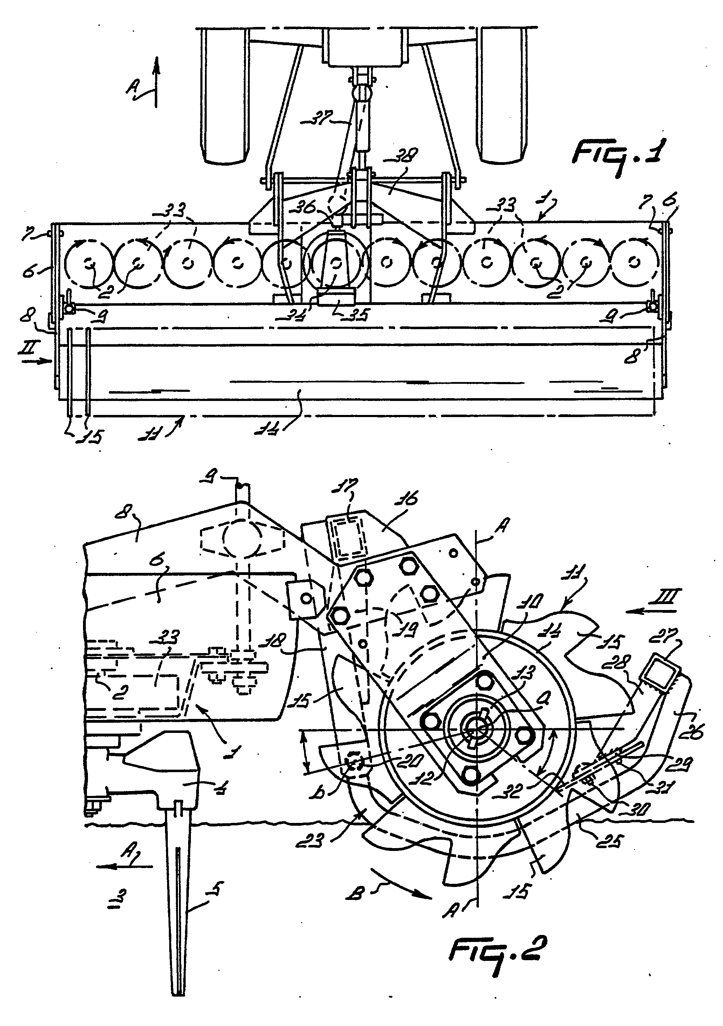

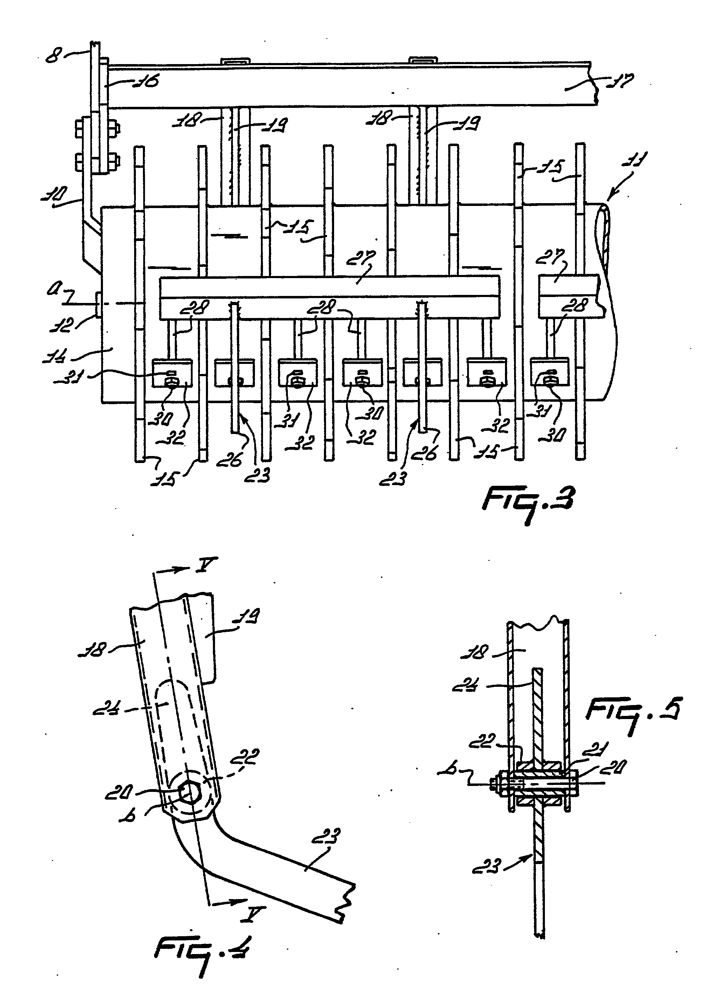

As is apparent from Figures 2 and 3, the roller 11 is in the form of a packer roller comprising a cylindrical portion 14 having a diameter of, preferably, approximately 30 cms. At at least substantially equal distances of preferably 8 - 10 cms, crowns of cams 15 are provided on the cylindrical portion 14. Said cams 15 are plate-shaped and extend at least substantially parallel to a plane perpendicular to the axis of rotation $a$ of the roller 11. A support 16 is provided at the upper side on the rearmost portion of each arm 8. A transverse carrier 17 is mounted between the supports 16. The said transverse carrier 17 is hollow and of a preferably rectangular cross-section, the positioning of the transverse carrier being such that the longest sides of the cross-section slope slightly forwards (Figure 2). The front side of the transverse carrier 17 is provided with downwardly extending, hollow supports 18 which are supported at the rear side by means of a strip 19. As is apparent from Figure 3, the hollow supports 18 are mounted on the transverse carrier 17, as seen in plan view and calculated from one end of the cylindrical portion 14, between the second and third crown of cams 15 and subsequently at an interspace encompassing three crowns of cams 15. The hollow supports 18 are of a straight shape and, as is apparent from Figure 2, extend slightly obliquely to the rear. The hollow supports 18 are preferably of a square cross-section. The lower end of each hollow support 18 is provided with a bolt 20, around which a sleeve 21 is provided inside the support (Figures 4 and 5).

Around the sleeve 21 there is pivotable a second sleeve 22, which forms part of a strip-shaped arm 23 having a portion 24 which tapers towards its free end and extends to within the hollow support 18. From the end of a hollow support 18, the arm 23 extends initially straight and merges just at the level of the lower side of the cylindrical portion 14 of the roller 11 via a curved portion into a straight portion 24, which, substantially below the axis of rotation 9 of the roller 11, merges via a curved portion into an obliquely upwardly and rearwardly directed straight portion 25 which, at the level of the ends of the cams 15 (Figure 2), merges via a curved portion into a final portion 26. Between themselves, the portions 24, 25 and 26 include angles of approximately 120°, 130° and 135°, respectively.

The longitudinal centre line $b$ of the bolt 20 constitutes a pivotal axis for an arm 23, which pivotal axis is located before a vertical plane A-A through the axis of rotation of the roller 11. The pivotal axis is located within the roller periphery at a circumferential angle of approximately 15° below the horizontal plane through the axis of rotation of the roller 11. The pivotal axis is spaced from the cylindrical portion 14 at a distance that is approximately half the height of a cam 15. The pivotal axis $b$ is located in the lowermost front quadrant of the roller 11 and is substantially in line with the axis of rotation $a$ of the roller 11 and the end of the final portion 26 of an arm 23 (Figure 2). The widest side of the strip-shaped arms 23 extending halfway between the crowns of cams 15 is located at least substantially parallel to the upright sides of the cams 15 (Figure 3). The ends of the respective pairs of arms 23 are provided with a transverse bar 27 of a preferably square cross-section (Figures 2 and 3). The transverse bar 27 is positioned such that a diagonal slightly slopes in the forward direction. Each transverse bar 27 is provided with six downwardly and forwardly directed supports 28, which extend to between the crowns of cams 15 and are in the form of strips. The supports 28 are located halfway between the crowns of cams 15 and are arranged such that their widest sides extend at least substantially parallel to the upright sides of the cams 15. The rearwardly bevelled lower end of each support 28 has a base portion 29, to which a, preferably rectangular, scraper element 32 of resilient material is secured by means of a bolt 30 and a locking pin 31. The scraper element 32 extends as far as the outer periphery of the cylindrical portion 14 of the roller 11. After the bolt 30 has been loosened, the scraper element 32 can be turned over 180°, whereby the hole used for the bolt can accommodate the locking pin 31 and that for the locking pin can be used for receiving the bolt 30 in order to secure the scraper element 32 in its new position.

Within the box-like frame portion 1, each shaft 2 of a soil working member 3 is provided with a pinion 33, the arrangement being such that the pinions on the shafts of adjacent soil working members 3 are in driving connection with each other.

Near its centre, the shaft 2 of a soil working member 3 is extended and reaches into a gear box 34 mounted on top of the frame portion 1. Within the gear box 34, the extension of the shaft 2 is in driving connection via a conical gear wheel transmission with a shaft which extends in the direction of operative travel A and is in driving connection via a speed variator 35 at the rear side of the gear box 34 with a superjacent shaft 36 which, at the front side, projects from said gear box and can be coupled to the power take-off shaft of a tractor via an intermediate shaft 37.

At its front side, the frame portion 1 includes a trestle 38 having a three-point connection for coupling the machine to the three-point lifting hitch of a tractor or the like vehicle.

The machine described in the foregoing operates as follows:

During operation, the machine being coupled to the three-point lifting hitch of a tractor by means of the trestle 38 is moved in a direction indicated by the arrow A, while each of the soil working members 3 can be rotated from the power take-off shaft via the intermediate shaft 27 and the above-described transmission, the arrangement being such that adjacent soil working members rotate in opposite directions (Figure 1).

Hereby, the soil working elements 5 of adjacent soil working members 3 cultivate at least adjoining strips of soil. The working depth of the soil working members 3 is set by means of the roller 11 at the rear side, which roller is in the form of a packer roller. To that end, as has been mentioned before, the respective arms 8 can be pivoted relative to the frame portion about the bolts 7 by means of the threaded spindles 9 at the rear side of the frame portion 1.

During travel of the machine, the packer roller 11 is caused to rotate with the aid of the cams 25 of the respective crowns of cams in the direction indicated in Figure 2 by the arrow B. During this rotary motion, the soil cultivated by the soil working members 3 is compressed with the aid of the cylindrical portion 14, so that this cultivated soil is compacted to an extent so as to allow an optimum germination of the seed introduced into the soil.

During the rotary motion of the roller 11, the arms 23 of the respective pairs, each supporting a transverse bar 27, are pushed upwardly about the pivotal shaft $b$ by the soil, whereby the front sides of the scraper elements 32 are pressed against the cylindrical portion 14 in a point where a line intersecting the axis of rotation $a$ of the roller includes an angle of preferably 40° or more with a horizontal plane through said axis of rotation.

During the rotary motion of the roller 11, the respective pairs of arms 23, on which the transverse bars 27 for the scraper elements 32 are mounted, can pivot about the pivotal axis $b$ which, as has been mentioned before, is located before a vertical plane A-A through the axis of rotation $a$ of the roller 11 and within the periphery of the roller, i.e. the path described by the free ends of the cams 15.

As is apparent from Figure 2, the pivotal axes $b$ for the pairs of arms 23 are located in the lowermost front quadrant of the roller 11 at a circumferential angle to a horizontal plane through the axis of rotation $a$ of the roller, which angle has a preferred value of approximately 15°. In this connection, the tapering portion 24 of each arm 23, which portion is located within the lower side of the hollow support 18 and is directed upwardly therein, constitutes a stop which on the one hand prevents the scraper elements 32 from bearing with an excessive pressure on the cylindrical portion 14, and on the other hand, during transportation, prevents the arms 23 together with the scraper elements 32 from pivoting downwardly in an undesired manner. The lowermost side of each arm 23 may be sharpened, so that any clods present can be crumbled still further and clogging of crop residues or weeds can be prevented or obviated to a substantial extent.

When a scraper element 32 has worn off too far, it can be detached by loosening of the bolt 30 and, after having been turned over 180°, can be set in its new position in the manner as described before. The specific design of the arms 23, i.e. comprising the respective portions 24 and 25 extending obliquely upwardly and being located before, respectively behind, the vertical plane A-A through the axis of rotation $a$ of the roller 11, ensures that the arm is moved easily through the soil during operation.

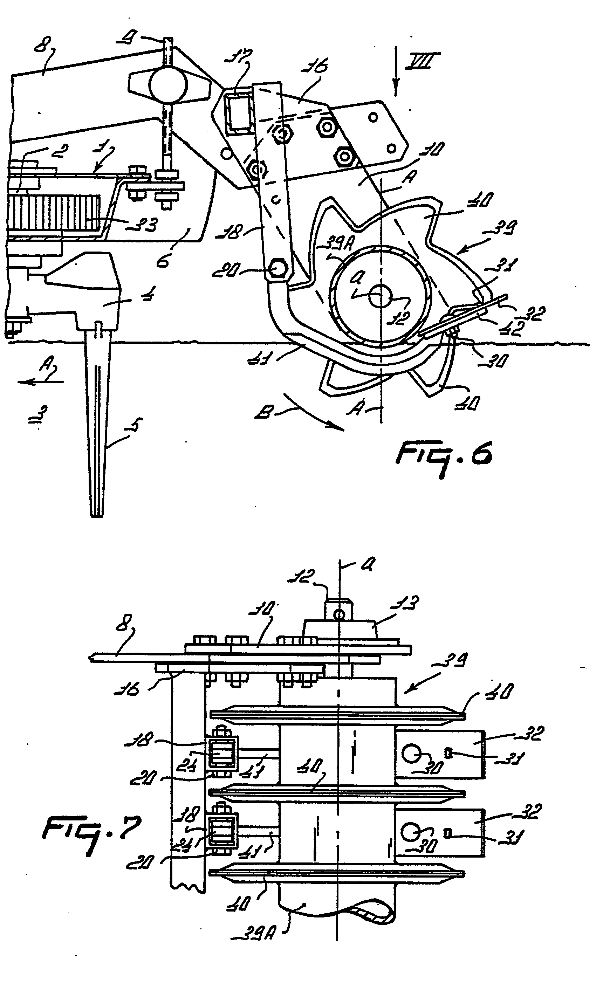

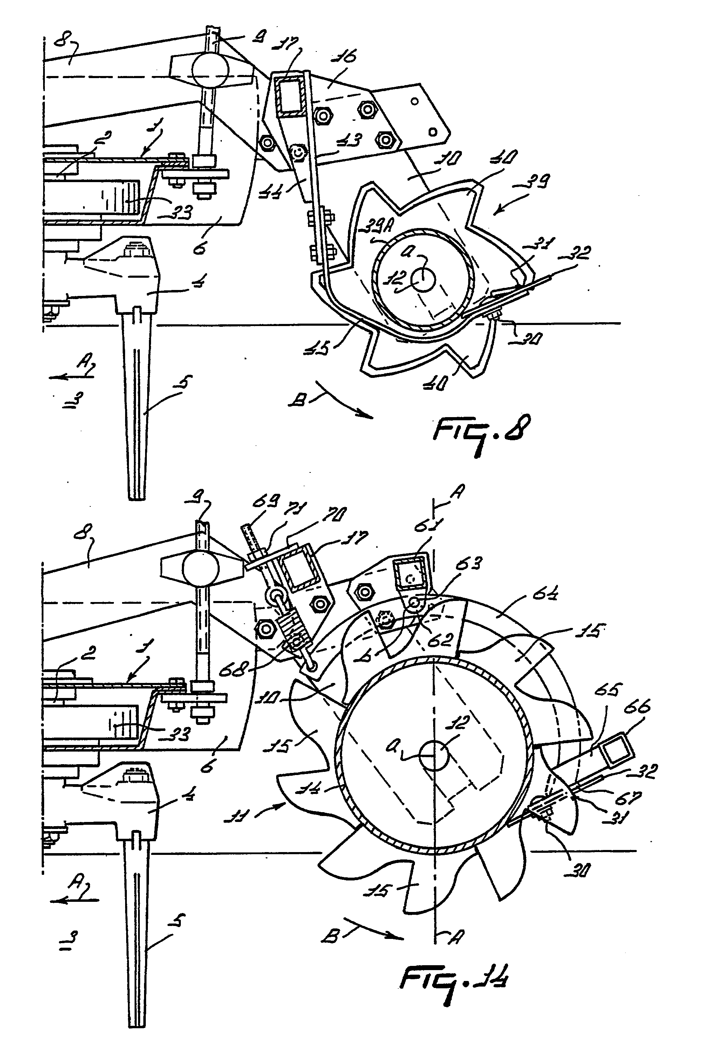

In the embodiment shown in Figures 6 and 7, the roller 39 comprises a cylindrical portion 39A having a preferred diameter of approximately 15 cms. In this embodiment, the cams 40 of the crowns of cams are in the form of punched-out pieces of plate material that are fastened together.

In this embodiment, the transverse carrier 17 for each scraper element 32 has a separate arm 41 extending substantially analogously to the arms 23 in the preceding embodiment; however, the arm 41 has been shortened to such an extent that the scraper element 32, which is directly applied to one arm end via a base 42, substantially bears against the periphery of the cylindrical portion 40 in the same point, i.e. at a circumferential angle of 40° below the horizontal plane through the axis of rotation of the roller 39.

Each of the arms 41 is arranged pivotally, in the same manner as the arms 23, at the lower side of a hollow support 18, which in this embodiment is connected to the rear side of the transverse carrier 17. In this embodiment, the pivotal axis $b$ is also located before the vertical plane A-A through the axis of rotation $a$ of the roller 11 and within the periphery of the roller, but in the uppermost front quadrant.

The embodiment shown in the Figures 6 and 7 provides the possibility of an extra compact construction which renders the machine, even more than in the preceding embodiment, suitable for a combination with an other implement, e.g. a seed drill or a planting machine.

This embodiment offers a larger degree of individual freedom for each of the scraper elements 32, which may have an advantageous effect on the individual scraper action. It will be obvious that the above-described individual support of the scraper elements can also be used with a roller of a different diameter, e.g. the roller 11 of the preceding embodiment. The bottom side of the arms 41 may also have been sharpened.

In the embodiment shown in Figure 8, an arm 45 in the form of a spring-steel strip is mounted on the transverse carrier 17 by means of a strip-shaped support 43 that is secured by means of a plate 44. The widest side of the arm 45 extends at least substantially parallel to the axis of rotation of the roller 39. The arm 45 has a shape which is identical to that of the arms 41 in the preceding embodiment. In this embodiment, each arm 45 has an imaginary pivotal axis located near the lower side of a support 43. Said pivotal axis is located before the plane A-A and at the level of the axis of rotation $a$ of the roller 39 and within the periphery of the roller. Alternatively, the construction of Figure 8 may be used for the roller 11 of the first embodiment.

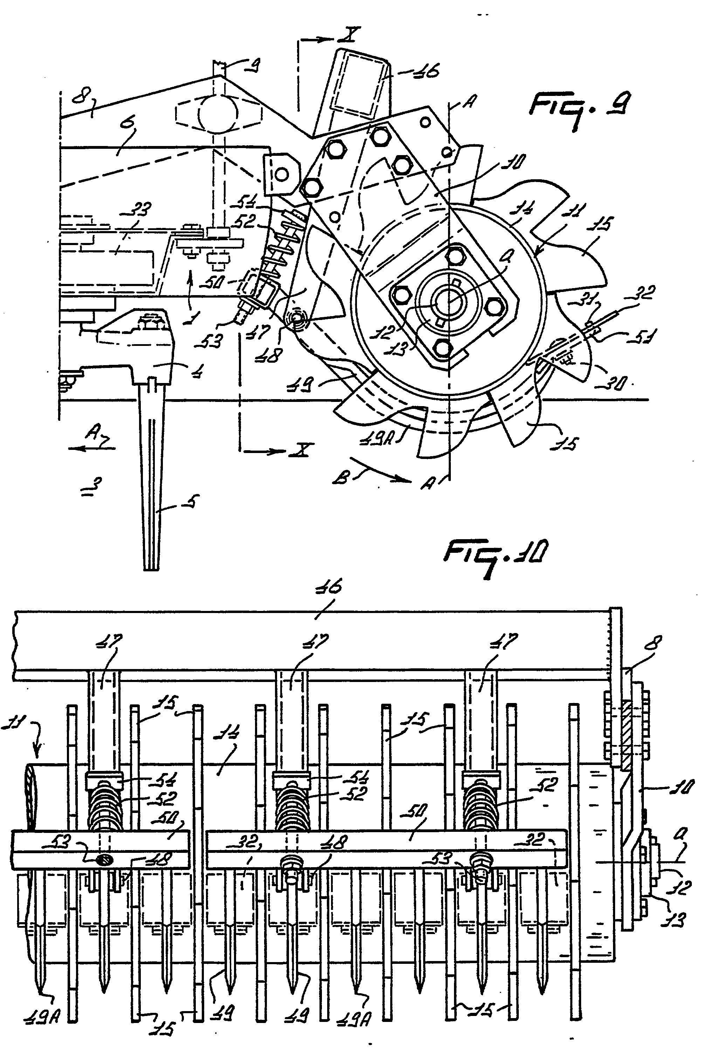

Figures 9 and 10 show an embodiment comprising a roller in accordance with the first embodiment, wherein a hollow transverse carrier 46 of a rectangular cross-section is provided whose largest sides slope rearwards. At its lowermost side, the transverse carrier 46 is provided with pairs of strips 47 which extend obliquely forwardly and downwardly. The pairs of strips 47 are located in positions which correspond to those of the arms 23 of the first embodiment (Figure 10). At the lower side, there is arranged between each pair of strips 47 an arm 49 which can pivot about a shaft 48. The longitudinal centre line of the shaft 48 constitutes a pivotal axis for an arm 49, which pivotal axis is located before a plane A-A through the axis of rotation $a$ of the roller 11 and in the lowermost front quadrant of the roller within the path described by the ends of the cams 25. Each arm 49 extends to before a pair of strips 47 and is connected to a transverse bar 50 by means of its front ends. The transverse bar 50 is always connected to one pair of arms 49 (Figure 10). At the other side of the shaft 48, an arm 49 initially extends in a straight line and substantially tangentially relative to the axis of rotation and subsequently curves upwards at least substantially concentrically with respect to the axis of rotation $a$ of the roller 11, the rearwardly and upwardly directed end of which arm, which has a bevelled lower side, extending to a point of the cylindrical portion 14 located at a circumferential angle of approximately 40° with respect to a horizontal plane through the axis of rotation $a$ of the roller (Figure 9). Each transverse bar 50 is fitted near its ends and between the arms 49 with an arm 49A. The arms 49A extend from a transverse bar 50 at least substantially halfway between two adjacent crowns of cams 25, said arms being of the same shape and design as the arms 49. The end of each of the respective strip-shaped arms 49 and 49A, which are located at least substantially halfway between the crowns of cams 25 and have sharp bottom ends, is provided with a base portion 51, with the aid of which a scraper element 32 of a resilient material is connected in a similar manner as in the preceding embodiments. In this embodiment, the scraper element 32 bears on the cylindrical portion 14 of the roller in a point located at a circumferential angle of approximately 45° below a horizontal plane through the axis of rotation $a$ of the roller. In this embodiment, the arms 49 and 49A are pushed upwards by means of a pressure spring 32 provided around a bolt 53 between the transverse bar 50 and a lug 54 between the pairs of strips 47, so that the scraper elements 32 are pressed against the cylindrical portion 14. The pressure springs 52 are located at the level of the arms 49. Any pivotal movement of the arms is effected about an axis formed by the longitudinal centre line of the shaft 48, which shaft is also located before a vertical plane A-A through the axis of rotation $a$ of the roller 11 and within the foremost quadrant of the roller 11. The application of spring pressure, as in this embodiment, may, partly because of the relatively long arm, result in a more effective scraping action of the scraper elements 32.

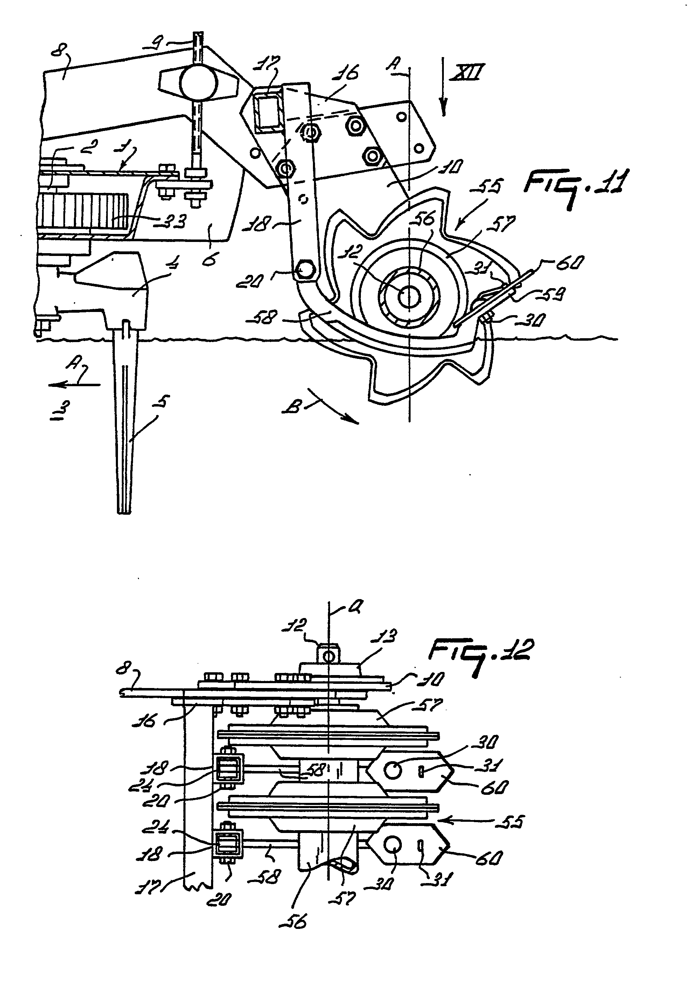

In the embodiment shown in Figures 11 and 12 of a construction according to the invention, there is provided a packer roller 55. The packer roller 55 comprises a cylindrical portion 56 on which elements 57, punched out of plate material, are mounted at some distance from each other. Each of the elements 57 has a barrel-shaped portion which is contiguous to the cylindrical portion 56 and merges into camshaped projections. The barrel-shaped portions of adjacent elements 57 are spaced apart at a distance which is approximately equal to half the width of a barrel-shaped portion (Figure 12). Between the barrel-shaped portions of the elements 57 there are arranged arms 58 in the form of strips.

The widest upright side of a strip-shaped arm 58 is located at least substantially halfway between two barrel-shaped portions and the bottom side of the arm has a sharp edge (Figure 11). At its front end, each arm 58 is mounted pivotally by means of a bolt 20 on the lower side of a hollow support 18 in the same way as in the first embodiment.

As is apparent from Figure 11, each arm 58 curves from its pivotal support, the arrangement being such that the lower side of the arm is convex. At the level of the rear side of the barrel-shaped portion of the elements 57, each arm 58 has a portion which is folded upwardly at a substantially square angle and constitutes a base portion 59, to which a scraper element 60 is connected in a similar way as the scraper element 32 in the previous embodiments. In this embodiment, the two short, opposite sides of the scraper element 60 are pointed, the arrangement being such that these sides are adapted to the contours of the barrel-shaped portions of the elements 57.

Using the construction shown in Figures 11 and 12, it is possible to obtain a compact and yet light structure, the same as with that of Figures 6 to 8.

Also in this embodiment, each scraper element 60 is arranged pivotally by means of its own arm 58 about a pivotal axis $b$ which is located before a vertical plane A-A through the axis of rotation $a$ of the roller 55 and at the level of the axis of rotation within the path described by the cam-shaped projections of the roller (Figure 11).

In this embodiment, during operation, the scraper elements 60 are pushed against the periphery of the barrel-shaped portions of the elements 57 via the arms 58 by the pressure exerted by the soil in the upward direction on said arms. The scraper elements bear against the periphery of the barrel-shaped portions of the elements 57 in a point at a circumferential angle of preferably 45° below a horizontal plane through the axis of rotation of the roller.

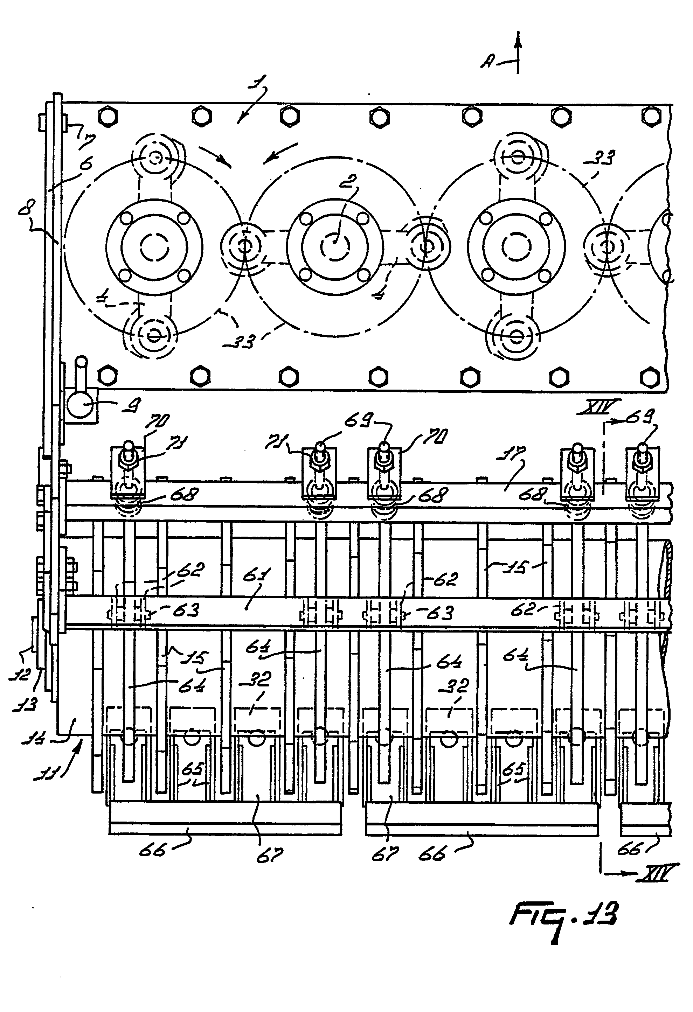

In the embodiment of the invention shown in Figures 13 and 14, the machine comprises a packer roller 11 in accordance with the first embodiment. In this embodiment, there is arranged between the rearmost portions of the arms 8 a transverse carrier 61 which, as is shown in a side view in Figure 14, is located just before a vertical plane A-A through the axis of rotation $a$ of the roller 11. The transverse carrier 61 is hollow and of a preferably square cross-section, whilst the upright edges slant slightly forwardly. At its lower end, the transverse carrier is provided with pairs of lugs 62 which are positioned relative to the crowns of cams 15 of the roller 11 in a manner as is illustrated in greater detail in Figure 13. An arm 64 in the form of a bracket is arranged between each pair of lugs 62 by means of a pin 63. The arm 64 extends concentrically over substantially 180° about the axis of rotation $\underline{a}$ of the roller 11 and, in a side view as shown in Figure 14, is located substantially wholly within the periphery of the roller, i.e. within the path described by the ends of the cams 15. At the rearwardly bevelled bottom side, each of the arms 64 is provided with a U-shaped support 65. A transverse bar 66 is arranged at the rear side between the U-shaped supports 65. The transverse bar 66, which is hollow and has a square cross-section, is provided, between the arms 64, with two forwardly extending U-shaped supports 65. Each of the U-shaped supports 65 has at its lower side a base 67, on which a scraper element 32 is mounted in the same manner as described in the foregoing. Each transverse bar 66 is hollow and of a preferably square cross-section. The front end of each of the arms 64 has an aperture, in which one end of a tension spring 68 is hooked, whose other end is hooked in an eye of a setting screw 69 which is passed through a support 70 located on the cross-carrier 17. The tension of the spring 68 can be set by means of a nut 71 which can co-operate with thread on the setting screw 69. In this embodiment, during operation, the scraper elements 32 are pressed against the outer periphery of the cylindrical portion 14 under the action of tension springs 68. In this situation, the arms 64 can pivot about a pivotal axis $\underline{b}'$ constituted by the longitudinal centre line of the shaft 63. As is apparent from Figure 11, the pivotal axis $\underline{b}'$ is located before the plane A-A through the axis of rotation of the roller 11 in a point where a line intersecting the axis of rotation of the roller includes an angle of approximately 15° with the plane A-A through the axis of rotation $\underline{a}$.

The pivotal axis $\underline{b}'$ is spaced from the front end of an arm 64 at a distance which is approximately equal to one third of the total length of said arm and is located within the uppermost front quadrant of the roller 11. The pivotal axis $\underline{b}'$ is so spaced from the lower ends of the arms 64 that any necessary motions of the scraper elements caused by deviations in the curvature of the cylindrical portion can be effected easily without the scraping action of the scraper elements 32 getting lost. Using the configuration of the scraper elements 32 as is illustrated in the drawings of the embodiments and described in the foregoing, said scraper elements 32 being pivotal about a pivotal axis which, relative to the direction of operative travel, is located before a vertical plane A-A through the axis of rotation of the roller, an efficient scraping action can be achieved in combination with a compact construction. In the embodiments, in which the scraper elements are freely pivotal to a limited extent, the scraper elements are pressed against the cylindrical portion 14 or against the periphery of the barrel-shaped portions of the elements 57 of the roller, respectively, by the pressure exerted by the soil, so that no additional means are required for this purpose, whilst the pressure is not unduly high to cause excessive wear. In the embodiments in which the scraper elements bear under spring pressure against the outer side of the cylindrical portion of the roller, this pressure is not unduly high either to cause excessive wear.

In the proposed constructions, the scraper elements can easily adapt themselves, owing to the specific arrangement of the pivotal axis before the arms, without loss of scraping efficiency, via smooth movements to any irregularities in the cylindrical contours of the cylindrical portions and in the barrel-shaped portions of the elements 57 of the roller 55, respectively. In spite of the length of the pivotal arms of the scraper elements, which is important for said smooth movements, it is possible to obtain with the construction according to the invention a compact assembly, so that a combination of the soil cultivating machine with e.g. a seed drill or planting machine is not obstructed in any way. The specific support by means of the hollow supports 18 forms an adequate protection against contamination.

## Claims

1. A soil cultivating machine comprising a plurality of soil working members (3) mounted on a frame (1) and a packer roller (11) located therebehind, which roller includes a cylindrical portion (14) and spaced apart crowns of cams (15) provided thereon, whilst scraper elements (32) are arranged between said crowns of cams (15), characterized that during operation the scraper elements (32) are pivotable about a pivotal axis ($\underline{b}$) located, relative to the direction of operative travel of the machine, before the vertical plane (A-A) through the axis of rotation ($\underline{a}$) of the roller (11) and within the envelope defined by the ends of the cams (15) of the respective crowns of cams (15).

2. A soil cultivating machine as claimed in claim 1, characterized in that the pivotal axis ($\underline{b}$) is spaced from the cylindrical portion (14) of the roller (11) at a distance which is approximately half the height of a cam (15) of a crown of cams (15).

3. A soil cultivating machine as claimed in claim 1 or 2, characterized in that, taken in the direction of operative travel of the machine, the pivotal axis ($\underline{b}$) is located in the lowermost front quadrant of the roller (11).

4. A soil cultivating machine as claimed in claim 1 or 2, characterized in that, taken in the direction of operative travel of the machine, the pivotal axis ($\underline{b}$) is located in the uppermost front quadrant of the roller (11).

5. A soil cultivating machine as claimed in any one of the preceding claims, characterized in that the scraper element ( 32 ) is mounted on an arm (23, 41, 45, 49, 49A, 64 ) which extends in the direction of operative travel of the machine and rearwardly from the pivotal point between two crowns of cams (15).

6. A soil cultivating machine as claimed in claim 5, characterized in that the rear end of the pivotal arm (23), that extends rearwardly below the cylindrical portion (14) of the roller (11), is located above a horizontal plane through the axis of rotation ($\underline{a}$) of the roller (11).

7. A soil cultivating machine as claimed in claim 6, characterized in that the pivotal arm (23) has, before and behind the axis of rotation (a) of the roller (11), a straight portion extending obliquely upwardly from a point located below the axis of rotation of the roller.

8. A soil cultivating machine as claimed in claim 6 or 7, characterized in that the pivotal arm (23, 41, 49, 49A) is sharpened at its lower side.

9. A soil cultivating machine as claimed in any one of the preceding claims 5 to 8, characterized in that the pivotal arm (45, 49, 49A, 64) is subjected to spring pressure, which acts on the front side of the pivotal arm (45, 49, 49A, 64).

10. A soil cultivating machine as claimed in any one of the preceding claims 5 to 8, characterized in that the arm (23, 41) is pivotally connected to the lowermost end of a hollow support (18), into which an upwardly extending portion (24) of the arm extends, the said upwardly extending portion (24) constituting a stop which co-operates with the inner side of the hollow support (18).

11. A soil cultivating machine as claimed in claim 10, characterized in that the hollow supports (18) are mounted on a transverse carrier (17) located before the vertical plane (A-A) through the axis of rotation (a) of the roller (11) and extending downwardly from the said transverse carrier (17).

12. A soil cultivating machine as claimed in any one of claims 5 to 11, characterized in that two pivotal arms (49) are provided with a transverse bar (50), on which a plurality of scraper elements (32) are mounted next to each other, the said transverse bar (50) being located at a higher level than the pivotal axis (b) for the said arm (49).

13. A soil cultivating machine as claimed in claim 5, characterized in that the pivotal arm (64) between two crowns of cams (15) surrounds at least partially the cylindrical portion (14) of the roller (11) at the upper side and extends concentrically relative to the axis of rotation (a) of the roller (11), whereby the rear end of the arm (64) is positioned in the point located below a horizontal plane through the axis of rotation (a) of the roller (11).

14. A soil cultivating machine as claimed in claim 13, characterized in that the axis (b) about which the arm (64) is pivotal, is located in a point where a line intersecting the axis of rotation (a) of the roller (11) includes an angle of approximately 15° with the vertical plane through the axis of rotation (a) of the roller (11) and at one third of the total length of the arm (64), taken in a direction from the front end of the arm.

15. A soil cultivating machine as claimed in any one of the preceding claims, characterized in that the front end of a scraper element (32) bears against the outer periphery of the cylindrical portion (14) in a point located on a circumferential angle of at least 40° below a horizontal plane through the axis of rotation (a) of the roller (11).

16. A soil cultivating machine as claimed in any one of the preceding claims, characterized in that the roller (11) can be adjusted in height relative to the frame (1) supporting the soil working members (13).

## Patentansprüche

1. Bodenbearbeitungsmaschine mit an einem Gestell (1) angeordneten Bodenbearbeitungsgliedern (3) und einer nachgeordneten Packerwalze (11), die einen zylindrischen Teil (14) aufweist, auf dem mit Abstand voneinander angeordnete Zahnkränze vorgesehen sind, zwischen denen Abstreiferelemente (32) angeordnet sind, dadurch gekennzeichnet, daß die Abstreiferelemente (32) im Betrieb um eine Schwenkachse (b) schwenkbar sind, die in bezug auf die Arbeitsrichtung der Maschine vor der durch die Drehachse (a) der Walze (11) gehenden Vertikalebene (A-A) der Walze (11) und innerhalb der Hüllfläche liegt, die durch die Enden der Zähne (15) der betreffenden Zahnkränze (15) definiert ist.

2. Bodenbearbeitungsmaschine nach Anspruch 1, dadurch gekennzeichnet, daß die Schwenkachse (b) von dem zylindrischen Teil (14) der Walze (11) einen Abstand hat, der annähernd gleich der halben Höhe eines Zahnes (15) eines Zahnkranzes (15) ist.

3. Bodenbearbeitungsmaschine nach Anspruch 1 oder 2, dadurch gekennzeichnet, daß sich die Schwenkachse (b), bezogen auf die Arbeitsrichtung der Maschine, im unteren vorderen Quadranten der Walze (11) befindet.

4. Bodenbearbeitungsmaschine nach Anspruch 1 oder 2, dadurch gekennzeichnet, daß sich die Schwenkachse (b), bezogen auf die Arbeitsrichtung der Maschine, im oberen vorderen Quadranten der Walze (11) befindet.

5. Bodenbearbeitungsmaschine nach einem der vorhergehenden Ansprüche, dadurch gekennzeichnet, daß das Abstreifelement (32) auf einem Arm (23, 41, 45, 49, 49A, 64) angeordnet ist, der sich in der Arbeitsrichtung der Maschine und von dem Schwenkpunkt aus nach hinten zwischen zwei Zahnkränzen (15) erstreckt.

6. Bodenbearbeitungsmaschine nach Anspruch 5, dadurch gekennzeichnet, daß das rückwärtige Ende des Schwenkarmes (3), der sich nach hinten unter dem zylindrischen Teil (14) der Walze (11) erstreckt, oberhalb einer durch die Drehachse (a) der Walze (11) gehenden Horizontalebene liegt.

7. Bodenbearbeitungsmaschine nach Anspruch 6, dadurch gekennzeichnet, daß der Schwenkarm (23) vor und hinter der Drehachse (a) der Walze (11) einen geradlinigen Abschnitt aufweist, der sich von einem Punkt unterhalb der Drehachse der Walze schräg aufwärts erstreckt.

8. Bodenbearbeitungsmaschine nach Anspruch 6 oder 7, dadurch gekennzeichnet, daß der Schwenkarm (23, 41, 49, 49A) an seiner Unterseite angeschärft ist.

9. Bodenbearbeitungsmaschine nach einem der vorhergehenden Ansprüche 5 bis 8, dadurch gekennzeichnet, daß der Schwenkarm (45, 49, 49A, 64) durch Federdruck belastet ist, der auf die Vorderseite des Sohwenkarmes (45, 49, 49A, 64) wirkt.

10. Bodenbearbeitungsmaschine nach einem der vorhergehenden Ansprüche 5 bis 8, dadurch gekennzeichnet, daß der Arm (23, 41) schwenkbar mit dem untersten Ende einer hohlen Stütze (18) verbunden ist, in die sich ein aufwärts gerichteter Abschnitt (24) des Armes erstreckt, wobei der aufwärts gerichtete Abschnitt (24) einen Anschlag bildet, der mit der Innenseite der hohlen Stütze (18) zusammenwirkt.

11. Bodenbearbeitungsmaschine nach Anspruch 10, dadurch gekennzeichnet, daß die hohle Stütze (18) an einem vor der Vertikalebene (A-A) durch die Drehachse (a) der Walze (11) befindlichen Querträger (17) angebracht ist und sich von dem Querträger (17) nach unten erstreckt.

12. Bodenbearbeitungsmaschine nach einem der Ansprüche 5 bis 11, dadurch gekennzeichnet, daß zwei Schwenkarme (49) mit einem Querbalken (50) vorgesehen sind, auf dem eine Anzahl Abstreifelemente (32) nahe benachbart zueinander angebracht sind, wobei der Querbalken (50) höher liegt als die Schwenkachse (b) für den Arm (49).

13. Bodenbearbeitungsmaschine nach Anspruch 5, dadurch gekennzeichnet, daß der Schwenkarm (64) zwischen zwei Zahnkränzen (15) den zylindrischen Teil (14) der Walze (11) mindestens teilweise an dessen Oberseite umgibt und konzentrisch zur Drehachse (a) der Walze (11) verläuft, wobei sich das hintere Ende des Armes (64) in dem Punkt befindet, der unterhalb einer Horizontalebene durch die Drehachse (a) der Walze (11) liegt.

14. Bodenbearbeitungsmaschine nach Anspruch 13, dadurch gekennzeichnet, daß die Achse (b), um die der Arm ( 64 ) schwenkbar ist, auf einem Punkt liegt, der – vom vorderen Ende des Armes aus betrachtet – auf einem Drittel der Gesamtlänge des Armes (64) und auf einer die Drehachse (a) der Walze (13) schneidenden Geraden liegt, die mit der durch die Drehachse (a) der Walze (11) gehenden Vertikalebene einen Winkel von etwa 15° einschließt.

15. Bodenbearbeitungsmaschine nach einem der vorhergehenden Ansprüche, dadurch gekennzeichnet, daß das vordere Ende eines Abstreifelementes (32) am Außenumfang des zylindrischen Teiles (14) der Walze (11) in einem Punkt anliegt, der auf einem Umfangswinkel von mindestens 40° unterhalb einer durch die Drehachse (a) der Walze ( 11 ) gehenden Horizontalebene liegt.

16. Bodenbearbeitungsmaschine nach einem der vorhergehenden Ansprüche, dadurch gekennzeichnet, daß die Walze (11) in bezug auf das die Bodenbearbeitungsglieder (13) tragende Gestell (1) höhenverstellbar ist.

## Revendications

1. Machine pour cultiver le sol comprenant une pluralité d'organes de travail du sol (3) montés sur un chassis (1) et un rouleau compacteur (11) situé derrière ces organes, ce rouleau comprenant une partie cylindrique (14) et des couronnes de cames (15) espacées, prévues sur ladite partie cylindrique, des éléments racleurs (32) étant disposés entre lesdites couronnes de cames (15) caractérisée en ce que, pendant le fonctionnement, les éléments racleurs (32) peuvent pivoter autour d'un axe de pivotement (b) situé, par rapport au sens de marche pour le travail de la machine, en avant du plan vertical (A-A) contenant l'axe de rotation (a) du rouleau (11), et situé dans l'enveloppe définie par les extrémités des cames (15) des couronnes respectives de cames (15).

2. Machine pour cultiver le sol selon la revendication 1, caractérisée en ce que l'axe de rotation (b) est espacé de la partie cylindrique (14) du rouleau (11) d'une distance qui est approximativement la moitié de la hauteur d'une came (15) d'une couronne de cames (15).

3. Machine pour cultiver le sol selon la revendication 1 ou 2, caractérisée en ce que, pris dans le sens de marche pour le travail de la machine, l'axe de pivotement (b) est situé dans le quadrant antérieur inférieur du rouleau (11).

4. Machine pour cultiver le sol selon la revendication 1 ou 2, caractérisée en ce que, pris dans le sens de marche pour le travail de la machine, l'axe de pivotement (b) est situé dans le quadrant antérieur supérieur du rouleau (11).

5. Machine pour cultiver le sol selon l'une quelconque des revendications précédentes, caractérisée en ce que l'élément racleur (32) est monté sur un bras (23, 41, 45, 49, 49A, 64) qui s'étend dans le sens de marche pour le travail de la machine et à l'arrière du point de pivotement entre deux couronnes de cames (15).

6. Machine pour cultiver le sol selon la revendication 5, caractérisée en ce que l'extrémité postérieure du bras pivotant (23) qui s'étend vers l'arrière sous la partie cylindrique (14) du rouleau (11) est située au dessus d'un plan horizontal contenant l'axe de rotation (a) du rouleau (11).

7. Machine pour cultiver le sol selon la revendication 6, caractérisée en ce que le bras pivotant (23) a, devant et derrière l'axe de rotation (a) du rouleau (11), une partie rectiligne s'étendant obliquement vers le haut à partir d'un point situé sous l'axe de rotation du rouleau.

8. Machine pour cultiver le sol selon la revendication 6 ou 7, caractérisée en ce que le bras pivotant (23, 41, 49, 49A) est aiguisé sur son côté inférieur.

9. Machine pour cultiver le sol selon l'une quelconque des revendications 5 à 8 précédentes, caractérisée en ce que le bras pivotant (45, 49, 49A, 64) est soumis à la pression d'un ressort s'exerçant sur le côté antérieur du bras pivotant (45, 49, 49A, 64).

10. Machine pour cultiver le sol selon l'une quelconque des revendications 5 à 8 précédentes, caractérisée en ce que le bras (23, 41) est relié de manière pivotante à l'extrémité inférieure d'un support creux (18) dans lequel s'étend une partie (24) du bras qui s'étend vers le haut, ladite partie (24) s'étendant vers le haut constituant une butée qui coopère avec le côté antérieur du support creux (18).

11. Machine pour cultiver le sol selon la revendication 10, caractérisée en ce que les supports creux (18) sont montés sur un support transversal (17) situé en avant du plan vertical (A-A) contenant l'axe de rotation (a) du rouleau (11) et s'étendant vers le bas à partir dudit support transversal (17).

12. Machine pour cultiver le sol selon l'une quelconque des revendications 5 à 11, caractérisée en ce que deux bras pivotants (49) sont munis d'une barre transversale (50) sur laquelle une pluralité d'éléments racleurs (32) sont montés cote à cote, ladite barre transversale (50) étant située à un niveau plus haut que l'axe de pivotement (b) pour ledit bras (49).

13. Machine pour cultiver le sol selon la revendication 5, caractérisée en ce que le bras pivotant (64) entre deux couronnes de cames (15) entoure au moins partiellement la partie cylindrique (14) du rouleau (11) sur le côté supérieur et s'étend concentriquement à l'axe de rotation (a) du rouleau (11) grâce à quoi l'extrémité postérieure du bras (64) est positionnée à l'endroit situé sous un plan horizontal contenant l'axe de rotation (a) du rouleau (11).

14. Machine pour cultiver le sol selon la revendication 13, caractérisée en ce que l'axe (b) autour duquel pivote le bras (64) est situé en un point où une ligne coupant l'axe de rotation (a) du rouleau (11) forme un angle d'environ 15° avec le plan vertical contenant l'axe de rotation (a) du rouleau (11), et à un tiers de la longueur totale du bras (64), prise dans un sens partant de l'extrémité antérieure du bras.

15. Machine pour cultiver le sol selon l'une quelconque des revendications précédentes, caractérisée en ce que l'extrémité antérieure d'un élément racleur (32) porte contre la périphérie extérieure de la partie cylindrique (14) en un point situé sur un angle circonférentiel d'au moins 40° sous un plan horizontal contenant l'axe de rotation (a) du rouleau (11).

16. Machine pour cultiver le sol selon l'une quelconque des revendications précédentes, caractérisée en ce que le rouleau (11) peut être réglé en hauteur par rapport au châssis (1) supportant les organes de travail du sol (13).

FIG.1

FIG.2

FIG.3

FIG.4

FIG.5

FIG.6

FIG.7

FIG.8

FIG.14

FIG. 9

FIG. 10

FIG.11

FIG.12

FIG. 13